(19) Europäisches Patentamt
European Patent Office
Office européen des brevets

(11) **EP 4 317 667 B1**

(12) **EUROPEAN PATENT SPECIFICATION**

(45) Date of publication and mention
of the grant of the patent:
**25.02.2026 Bulletin 2026/09**

(21) Application number: **23187504.8**

(22) Date of filing: **25.07.2023**

(51) International Patent Classification (IPC):
**F02D 19/06** (2006.01)      **F02D 35/02** (2006.01)
**F02D 41/00** (2006.01)

(52) Cooperative Patent Classification (CPC):
**F02D 41/0027; F02D 19/0642; F02D 35/023;**
F02D 2250/14; Y02T 10/30

(54) **A METHOD FOR DETECTING PRE-IGNITION IN A LARGE ENGINE AND A LARGE ENGINE**

VERFAHREN ZUR ERKENNUNG VON VORZÜNDUNG IN EINEM GROSSMOTOR UND GROSSMOTOR

PROCÉDÉ DE DÉTECTION DE PRÉ-ALLUMAGE DANS UN GRAND MOTEUR ET GRAND MOTEUR

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.08.2022 EP 22188343**

(43) Date of publication of application:
**07.02.2024 Bulletin 2024/06**

(73) Proprietor: **WinGD AG
8400 Winterthur (CH)**

(72) Inventor: **Topaloglou, Sotiris
8472 Seuzach (CH)**

(74) Representative: **IPS Irsch AG
Langfeldstrasse 88
8500 Frauenfeld (CH)**

(56) References cited:
**EP-A1- 2 957 750          WO-A1-2018/108846
DE-A1- 102010 003 291**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The invention relates to a method for detecting pre-ignition in a large engine and to a large engine according to the preamble of the independent patent claim of the respective category.

Large engines may be configured as large diesel engines, which are usually operated with self-ignition of the fuel, or as large Otto engines, which are usually operated with induced ignition, e.g. spark ignition. Furthermore, large engines are known, which are operated in a mixed mode, i.e. with both self-ignition of a fuel and induced ignition of a fuel.

Large engines, which can be designed as two-stroke or four-stroke engines, for example as longitudinally scavenged two-stroke large diesel engines, are often used as drive units for ships or in stationary operation, e.g. to drive large generators for generating electrical energy. The engines usually run for considerable periods in continuous operation, which places high demands on operational safety and availability. As a consequence, particularly long maintenance intervals, low wear and an economical handling of the operating materials are central criteria for the operator. Large engines typically have cylinders, which inner diameter (bore) is at least 200 mm. Nowadays, large engines with a bore of up to 960 mm or even more are used. Within the framework of this application the term "large engine" designates an internal combustion engine with a bore of the cylinder(s), which is at least 200 mm and preferably at least 300 mm.

Large diesel engines are classically operated with heavy fuel oil. Under the aspects of economic and efficient operation, compliance with exhaust gas limit values and the availability of resources, alternatives to the fuel heavy fuel oil are now also being sought for large diesel engines. In this respect, both liquid fuels are used, i.e. fuels that are introduced into the combustion chamber in the liquid state, and gaseous fuels, i.e. fuels that are introduced into the combustion chamber in the gaseous state.

Examples of liquid fuels as known alternatives to heavy fuel oil are other heavy hydrocarbons, which are particularly left over as residues from oil refining, alcohols, in particular methanol or ethanol, gasoline, diesel, or also emulsions or suspensions. For example, it is known to use emulsions known as MSAR (Multiphase Superfine Atomized Residue) as fuel. A well-known suspension is that of coal dust and water, which is also used as fuel for large engines. As gaseous fuels, natural gases such as LNG (liquefied natural gas), liquefied gases such as LPG (liquefied petroleum gas) or ethane are known.

In particular, large diesel engines are also known which can be operated with at least two different fuels, whereby the engine is operated either with one fuel or with the other fuel depending on the operating situation or environment.

One example of a large diesel engine that can be operated with two different fuels is a large diesel engine, which is configured as a dual-fuel large diesel engine. This engine can be operated in a liquid mode in which a liquid fuel is introduced into the cylinder for combustion and in a gas mode in which a gas is introduced into the cylinder as fuel.

Large diesel engines, which can be operated with at least two or even more different liquid or gaseous fuels, are often operated in different operating modes depending on the fuel currently in use. In the operating mode often referred to as Diesel operation, the combustion of the fuel generally takes place according to the principle of compression ignition or self-ignition of the fuel. In the mode often referred to as Otto operation, combustion takes place by induced ignition of an ignitable pre-mixed air-fuel mixture. This induced ignition can take place, for example, by an electrical spark, e.g. with a spark plug, or also by the self-ignition of a small injected amount of fuel, which then causes the induced ignition of another fuel. The small amount of fuel intended for self-ignition is often injected into a pre-chamber connected to the combustion chamber.

Furthermore, mixed forms using both Otto and Diesel operation are also known.

Within the framework of this application, the term "large diesel engine" refers to such engines, which can be operated at least in a Diesel operation. In particular, the term "large diesel engine" thus also comprises such dual-fuel large engines that can be operated in another mode, e.g. Otto operation, in addition to Diesel operation.

Thus, the term "large engine" comprises large diesel engines (as explained hereinbefore), large Otto engines, i.e. large engines, which can be operated only with Otto operation, e. g. a large gas engine operated with a gaseous fuel, and large engines, which can be operated in a mixed mode. The mixed mode is a mode where the engine is operated concurrently with Diesel and Otto operation.

Within the framework of this application, the term "gas mode" or "operation in gas mode" refers to using only the gas or gaseous fuel for torque-generating combustion as fuel. As already mentioned, it is possible and quite common that in the gas mode for the induced ignition of the pre-mixed air-fuel mixture a small amount of a self-igniting liquid fuel, e.g. heavy fuel oil, is injected to carry out the induced ignition, but nevertheless the combustion process which generates the torque is operated completely with the gas or the gaseous fuel.

This process of induced ignition by self-ignition of a small amount of a liquid fuel is sometimes referred to as pilot injection. This pilot injection has nothing to do with the injection of the liquid fuel into the combustion chamber when the large engine is operated in liquid mode. A different injection device is usually, but not necessarily, used for the pilot injection than for the injection of the liquid fuel in the liquid mode. In addition, in pilot injection, the small amount of the liquid fuel is also frequently not injected directly into the combustion chamber, but into at least one pre-chamber that is connected to the combustion chamber via a channel.

In particular in the gas mode, with regard to an economical, efficient, reliable and low-pollution operation, it is very important to avoid abnormal combustion processes, which occur in particular when the ratio of scavenging air to gas, i.e. the air-fuel ratio, is not within a certain range.

If the gas content is too high, the air-fuel mixture becomes too rich. The combustion of the mixture takes place too fast or too early, for example by self-ignition, which can lead to the knocking of the engine. This undesired self-ignition is also referred to as pre-ignition, because the air-fuel mixture ignites too early in the working cycle of the piston. If the air content is too high, the air-fuel mixture is too lean and misfiring can occur, which of course also has a negative effect on the efficient and low-pollution operation of the engine. In particular, these two states of too high gas content and too high air content are designated as abnormal combustion processes. Thus, in the gas mode one strives for a combustion process without self-ignition or pre-ignition of the air-gas mixture. The combustion process shall take place between the limits where the air-gas mixture is neither too rich nor too lean

If, for a given load of the large engine, the generated torque is plotted against the air-fuel ratio, the limits between a high-quality combustion and an abnormal combustion are given, for example, by two limit curves, namely a knocking limit and a misfiring limit, wherein the high-quality combustion lies between these two limit curves. In operating states that are beyond the knocking limit, the air-gas mixture is too rich, i.e. there is too little air in the mixture. A mixture that is too rich can lead to various problems, namely that the combustion takes place too fast (fast combustion), or that the engine begins to knock or that the mixture in the cylinder then usually begins to combust (pre-ignition) too early (related to the working cycle) by self-ignition due to the excessive gas content. In operating states beyond the misfiring limit, the air-gas mixture is too lean, i.e. there is not enough gas and/or too much air in the combustion chamber for an optimum combustion.

EP 2 957 750 A1 discloses a method for detecting pre-ignition in a large engine by measuring cylinder pressure during combustion, determining the ignition timing, and comparing it with a preset ignition window to detect pre-ignition. D1 does not calculate a peak pressure from two measured values or compare such a value with a threshold for detection.

Thus, there is a need, in particular when operating a large engine, for example a large diesel engine configured as a dual-fuel engine, in a gas mode, to detect the pre-ignition of the air-gas mixture, which is caused by a self-ignition of the air-gas mixture taking place prior to the intended induced ignition of the air-gas mixture. Starting from this state of the art, it is therefore an object of the invention to propose a method for detecting pre-ignition in a large engine operated in a gas mode. Furthermore, it is an object of the invention to propose a large engine which is operated with such a method.

The subject-matter of the invention is defined by the features of the independent claim of the respective category.

Thus, according to the invention, a method is proposed for detecting pre-ignition in a large engine having at least one cylinder in which a piston is arranged movable back and forth in an axial direction between a bottom dead center and a top dead center, wherein the large engine can be operated at least in a gas mode, in which an amount of gas is introduced as fuel into the cylinder, the gas is mixed with scavenging air and combusted at an air-gas-ratio, wherein during operation in the gas mode a first pressure in the cylinder is measured at a first position of the piston, and a second pressure in the cylinder is measured at a second position of the piston, wherein the first position and the second position are after the bottom dead center and before the top dead center. A peak pressure is calculated from the first pressure and the second pressure, and pre-ignition is detected by comparing the peak pressure with a threshold value.

The problem of detecting pre-ignition in large engines operated in Otto operation is that the pre-ignition typically starts before the piston reaches the top dead center, so that a simple cylinder pressure measurement at the top dead center is not really indicative of a pre-ignition. If pre-ignition occurs, the pressure in the cylinder at the top dead center position of the piston is usually not considerably higher than the cylinder pressure at top dead center without pre-ignition. Therefore, it is proposed to measure a first pressure in the cylinder at a first position of the piston as well as a second pressure in the cylinder at a second position of the piston, wherein both the first position and the second position are before the top dead center and after the bottom dead center. The first pressure and the second pressure are measured during the compression stroke of the piston before the piston reaches the top dead center. A peak pressure is calculated from the first pressure and the second pressure and said peak pressure is compared to a threshold value. If the calculated peak pressure is larger than the presettable threshold value, this is considered as a pre-ignition. If the calculated peak pressure is smaller than the presettable threshold value, this is considered as a regular combustion without pre-ignition.

By considering the change of the pressure in the cylinder in dependence of the position of the piston during the compression stroke of the cylinder it is possible to reliably detect a pre-ignition in the cylinder, because the increase of the pressure in the cylinder due to a pre-ignition is considerably larger than without a pre-ignition. Thus, the change in the pressure in the cylinder prior to the piston reaching the top dead center position is used to detect a pre-ignition in the cylinder. If the slope of the pressure curve is too strong, this is considered as a pre-ignition. If the difference between the first pressure and the second pressure relative to the change of the position of the piston is too strong, this is considered as a pre-ignition. In other words, in case the increase in the cylinder pressure with respect to the crank angle is too strong before the piston reaches the top dead center, it is considered as a pre-ignition taking place in the cylinder.

Preferably, the second position is closer to the top dead center than the first position. Thus, the second pressure is a larger pressure than the first pressure, because the piston is closer to the top dead center in the second position than in the first position.

Preferably, the peak pressure is the pressure at the top dead center. Thus, the first pressure and the second pressure are used to calculate the peak pressure as the pressure prevailing at the top dead center of the piston. **If** the calculated peak pressure at the top dead center is considerably larger than the threshold value, it is considered as a pre-ignition. If the pressure in the cylinder rises too fast due to a pre-ignition of the air-gas mixture in the cylinder the calculated peak pressure is far beyond a reasonable value for a pressure in the cylinder at the top dead center, because the pressure versus crankshaft curve is increasing too strongly between the first position and the second position.

According to a preferred embodiment, the peak pressure is calculated by a linear extrapolation of the difference between the second pressure and the first pressure divided by the difference between the second position and the first position. Thus, the difference between the first pressure and the second pressure is approximated by a straight line, and the straight line is extrapolated to the top dead center to calculate the peak pressure.

The position pf the piston is preferably measured by means of the crank angle, wherein the crank angle of zero degree corresponds to the top dead center. In a two-stroke engine a complete working cycle of the piston comprises a crank angle range of 360°, i.e. at the crank angle 360° the piston is in the same position as at the crank angle 0°.

Preferably, the threshold value is larger than the maximum of a mechanical compression curve of the cylinder. The mechanical compression curve is the pressure in the cylinder without a combustion taking place in the cylinder. The mechanical compression curve indicates the pressure change in the cylinder due to the volume change of the combustion chamber, i.e. the pressure change, which is caused by the change of the geometry of the combustion chamber without a combustion taking place.

According to a preferred embodiment, the threshold value is at least 1.5 times the maximum of the mechanical compression curve.

Even more preferred, the threshold value is at least two times the maximum of the mechanical compression curve.

Furthermore, it is preferred that the gas has already been introduced into the cylinder, when the piston reaches the second position, i.e. the second position of the piston is a position of the piston, after the supply of the gas has been finished.

Even more preferred, the gas has already been introduced into the cylinder, when the piston reaches the first position, i.e. the first position of the piston is a position of the piston after the supply of the gas has been finished.

According to a preferred embodiment the large engine is switched to a Diesel operation after a pre-ignition has been detected. Thus, in case the large engine cannot be operated in the gas mode without pre-ignition, the engine is operated in a Diesel mode, i.e. with desired self-ignition, to avoid any damages to the engine.

Furthermore, a large engine is proposed by the invention, wherein the large engine is operated with a method according to the invention.

Preferably, the large engine is designed as a longitudinally scavenged two-stroke large diesel engine, that is configured as a dual-fuel large diesel engine, which can be operated in a liquid mode, in which a liquid fuel is introduced into a cylinder for combustion, and which can further be operated in the gas mode, in which an amount of gas is introduced as fuel into the cylinder.

Further advantageous measures and embodiments of the invention result from the dependent claims.

In the following, the invention is explained in more detail on the basis of embodiments and referring to the drawing. In the drawing shows:

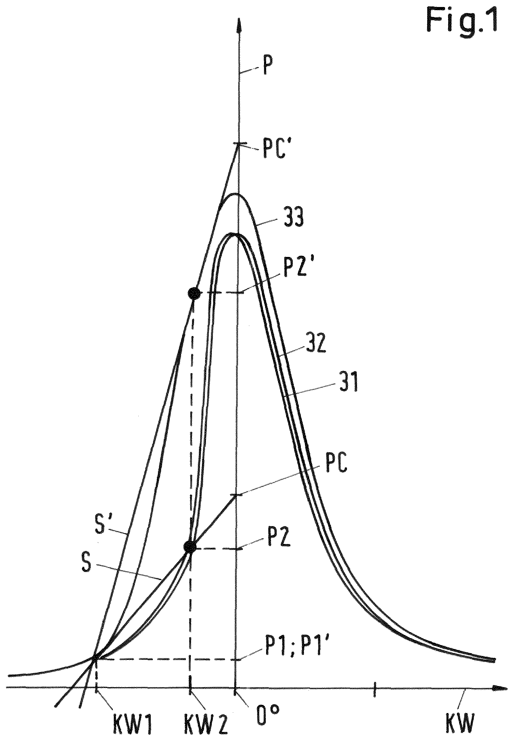

Fig. 1: an illustration of the pressure in the cylinder in dependence on the crank angle.

The term "large engine" refers to such internal combustion engines that are usually used as drive units for ships or even in stationary operation, e.g. to drive large generators for generating electrical energy. Typically, the cylinders of a large engine each have an inner diameter (bore) of at least about 200 mm. The term "longitudinally scavenged" means that the scavenging or charging air is introduced into the cylinder in the area of the lower end and an exhaust valve is arranged in or at a cylinder head located at the upper end of the cylinder.

In the following description of the invention, reference is made to a large diesel engine as an example for a large engine. It has to be noted that the invention is not restricted to large diesel engines but also comprises other types of large internal combustion machines, for example Otto engines that can be operated only with Otto operation such as large gas engines, which are operated e.g. with LNG.

The large diesel engine is designed as a dual-fuel large diesel engine, i.e. an engine which can be operated with two different fuels. In particular, the dual-fuel large diesel engine can be operated in a liquid mode in which only a liquid fuel is injected into a combustion chamber of a cylinder. Usually the liquid fuel, for example heavy fuel oil or a diesel oil, is injected directly into the combustion chamber at a suitable time and ignites there according to the diesel principle of self-ignition (Diesel operation). The large diesel engine can also be operated in a gas mode in which a gas serving as fuel, for example a natural gas such as LNG (Liquefied Natural Gas) or LPG (Liquefied Petroleum Gas) or ethane, is ignited in the combustion chamber in the form of a premixed air-fuel mixture. In particular, the large diesel engine operates in gas mode according to a low-pressure process, i.e. the gas is introduced into the cylinder in the gaseous state, whereby the injection pressure of the gas is at most 50 bar, preferably at most 20 bar, even more preferred at most 16 bar, and particularly preferred at most about 10 bar. The air-gas mixture is induced ignited in the combustion chamber according to the Otto principle. This induced ignition is usually caused by introducing a small amount of self-igniting liquid fuel (e.g. diesel or heavy fuel oil) into the combustion chamber or into a pre-chamber at a suitable moment, which fuel then ignites itself and causes the induced ignition of the air-fuel mixture in the combustion chamber. In other embodiments the induced ignition is made by way of a spark ignition.

Within the framework of this application, as already explained above, the term "gas mode" or "operation in gas mode" is to be understood such that the large diesel engine is operated only with gas or with a gaseous fuel in this gas mode, wherein optionally a small amount of a self-igniting fuel, e.g. heavy fuel oil or diesel oil, is introduced into the combustion chamber or into one pre-chamber or more pre-chambers merely for the induced ignition of the air-gas mixture (pilot injection).

Furthermore, the dual-fuel large diesel engine can be operated in a mixed mode, in which both liquid fuel and gaseous fuel are injected into the cylinder. In the mixed mode both the combustion of the self-igniting liquid fuel and the combustion of the induced ignited gaseous fuel contribute to the generation of the torque. For example, if the dual-fuel large diesel engine is operated in the gas mode and the required torque cannot be generated only with a high quality combustion of the gaseous fuel, an additional amount of liquid fuel is injected into the cylinder and combusted to additionally generate a torque such that the required torque is reached. Such a mixed mode operation is described for example in EP-A-3 267 017.

In the embodiment described here, reference is made to a large diesel engine which is designed as a longitudinally scavenged dual-fuel two-stroke large diesel engine.

The large diesel engine has at least one but usually a plurality of cylinders. Inside each cylinder, a piston is arranged movable back and forth in a manner known per se along a cylinder axis between a top dead center and a bottom dead center. The piston is connected in a manner known per se to a crosshead via a piston rod, which crosshead is connected to a crankshaft via a push rod or connecting rod so that the movement of the piston is transmitted via the piston rod, the crosshead and the connecting rod to the crankshaft to rotate it. The upper side of the piston delimits together with a cylinder cover a combustion chamber into which a fuel for combustion is introduced.

In the gas mode, this fuel is a gas. In a low-pressure process, for example, the gas is introduced into the cylinder through the cylindrical wall, i.e. the lateral area of the respective cylinder or through the cylinder liner, preferably approximately in the middle between the top and bottom dead center of the piston movement. In the cylinder, the gas mixes with the scavenging air during the compression movement of the piston and thus forms an ignitable air-fuel mixture which is then induced ignited when the piston is approximately at the top dead center. The induced ignition is preferably achieved by injecting a self-igniting fuel, e.g. heavy fuel oil or a diesel fuel, into a pre-chamber or a plurality of pre-chambers of the respective cylinder. The pilot injection, i.e. the injection of the liquid fuel in gas mode, which serves only for the induced ignition of the air-gas mixture in the combustion chamber, is preferably - but not necessarily - carried out by means of one or more pilot injection nozzles which are different from the main injection nozzle or main injection nozzles with which the liquid fuel is injected into the combustion chamber in the liquid mode.

In other embodiments the induced ignition may be caused by a spark ignition, e.g. by electrically generating a spark for the ignition of the air-fuel mixture.

In the preferred embodiment in which the pilot injection nozzle(s) is/are provided, the main injection nozzles for the liquid fuel are deactivated in gas mode, i.e., no injection takes place through the main injection nozzles. If no separate pilot injection nozzles are provided, the pilot injection for induced ignition of the air-gas mixture can also take place by means of the main injection nozzle(s). In any case, the amount of liquid fuel introduced for pilot injection is so small that it makes virtually no contribution to the torque-generating combustion. Typically, the pilot injection is dimensioned such that the combustion of the liquid fuel contributes at most 5% to the amount of energy or energy content released in the combustion process.

In liquid mode (Diesel operation), only a liquid fuel is injected into the combustion chamber of the cylinder. Usually, the liquid fuel, for example heavy fuel oil or a diesel oil, is injected directly into the combustion chamber at a suitable time and ignites there according to the diesel principle of self-ignition.

In liquid mode, only the liquid fuel is thus supplied to the combustion chamber by means of the main injection nozzles. If pilot injection nozzles are provided, it is possible to additionally introduce liquid fuel through the pilot injection nozzles in the liquid mode. However, this optional measure mainly serves to prevent the pilot injection nozzles from clogging up or becoming blocked, because the maximum fuel flow through the pilot injection nozzles is far too low to operate the large diesel engine in liquid mode only with it.

The structure and the individual components of a large diesel engine, such as the injection system for the liquid mode, the gas supply system for the gas mode, the gas exchange system, the exhaust system or the turbocharger system for the supply of the scavenging or charging air, as well as the monitoring and control system for a large diesel engine are sufficiently known to the person skilled in the art both for the design as a two-stroke engine and for the design as a four-stroke engine and therefore need no further explanation here.

In the embodiment of a longitudinally scavenged two-stroke large diesel engine described here, scavenging air slots are usually provided in the lower region of each cylinder or cylinder liner, which are periodically closed and opened by the movement of the piston in the cylinder, so that the scavenging air provided by the turbocharger under a charging pressure can flow into the cylinder through the scavenging air slots as long as they are open. In the cylinder head or in the cylinder cover a usually centrally arranged outlet valve is provided, through which the exhaust gases can be discharged from the cylinder into the exhaust system after the combustion process. The exhaust system guides at least a part of the exhaust gases to a turbine of the turbocharger, whose compressor provides the scavenging air, which is also referred to as charging air, in an intake receiver under the scavenge air pressure. The intake receiver is in fluid communication with the scavenging air slots of the cylinders. The scavenge air pressure is usually adjusted via a so-called waste gate, with which the amount of exhaust gas is adjusted, which is supplied to the turbocharger. The exhaust bypass, i.e. the mass flow of the exhaust gas that bypasses the turbine of the turbocharger, is usually adjusted or regulated by the waste-gate, which can be designed as an analogous valve, for example.

For the introduction of the liquid fuel, the one or the more main injection nozzles are provided, which are arranged in the cylinder head near the outlet valve, for example. For the gas supply, a gas supply system is provided which comprises at least one gas inlet valve with a gas inlet nozzle. Typically, the gas inlet nozzle is provided in the wall of the cylinder, for example at a height approximately in the middle between the top and bottom dead center of the piston.

The monitoring and control system in modern large diesel engines - including the various sensors for measuring operational parameters - is an electronic system with which usually all engine or cylinder functions, in particular the injection (start and end of the injection) and the activation of the outlet valve, can be set or controlled or regulated.

In order to even improve the energy efficiency in large diesel engines it is the aim to extract as much energy as possible from the exhaust gases resulting from the combustion process so that this energy is not released into the environment unused, for example in the form of heat. In large diesel engines, for example, it is known - as an option - to perform a so-called "intelligent control by exhaust recycling (iCER)". Here, depending on the fuel currently being used and the current load at which the engine is operated, a part of the exhaust gases coming from the turbine of the turbocharger is supplied to an energy recovery unit, for example a heat exchanger, in order to use the thermal energy still contained in the exhaust gases, and from there to the intake receiver, that supplies the scavenging air to the cylinders..

In this respect, it is known, for example, to recirculate a part of the exhaust gas from the exhaust pipe leading from the turbocharger to the exhaust or chimney of the large diesel engine in order to extract energy from the exhaust gas in a heat exchanger, which can then be used. A back pressure valve is usually provided in the exhaust pipe, which can increase the pressure in the exhaust pipe coming from the turbocharger, and which diverts a part of the exhaust gas as recirculation flow into a recirculation pipe, which then supplies the exhaust gas to an energy recovery unit, for example to a heat exchanger. For this purpose, two valves may be provided, namely a first valve in the recirculation pipe which is usually designed as a shut-off valve, i.e. it can be switched between an open position and a closed position, and a second valve, which is provided in the exhaust pipe and is usually called a back pressure valve (BPV). The part of exhaust gas that is diverted as recirculation flow from the exhaust pipe into the recirculation pipe can be adjusted with this valve.

In particular, large diesel engines configured as dual-fuel engines with low pressure gas injection in the gas mode are very sensitive to the air-fuel ratio, which is also referred to as lambda ($\lambda$) value. The air-fuel ratio should be kept in such a range that the air-gas ratio is neither too low (mixture too rich) nor too high (mixture to lean). Furthermore, such large diesel engines are very sensitive to varying ambient conditions such as changes in the ambient temperature or in the humidity of the ambient air.

One of the problems when operating the large diesel engine in the gas mode is the occurrence of pre-ignition, which is also referred to as an undesired self-ignition of the air-gas mixture in the cylinder. Pre-ignition may occur, for example, when the air-gas mixture in the combustion chamber is too rich, meaning that the amount of gas is too high relative to the amount of air. The air-gas mixture ignites by an undesired self-ignition before the pilot injection for the induced ignition of the air-gas mixture takes place. The combustion process starts too early. This is detrimental for the efficiency, the emissions and the reliability of the engine. Furthermore, pre-ignition causes a strongly enhanced wear of several components of the engine and can even cause failure of components. Therefore, it is important to reliably detect the occurrence of pre-ignition. The invention proposes a reliable method for detecting the occurrence of pre-ignition in the cylinder of a large engine.

The method according to the invention is based on measuring a first pressure in the cylinder at a first position of the piston and a second pressure in the cylinder at a second position of the piston. The first position and the second position are preferably fixed positions, which are both between the bottom dead center and the top dead center during the compression stroke of the piston. I.e. the first position is a position when the piston has already passed the bottom dead center and not yet reached the top dead center, and the second position as well is a position when the piston has already passed the bottom dead center and not yet reached the top dead center.

As it is common in the art the position of the piston is preferably measured by means of the crank angle.

Fig. 1 shows a pressure P in the combustion chamber of the cylinder in dependence on the crank angle KW for an operation in the gas mode. In the case of a two-stroke large diesel engine, one working cycle of a cylinder comprises a crank angle range of 360°. At the crank angle 0° or 360°, the piston is at the top dead center, at which point the combustion chamber has the minimum volume and near which the ignition of the fuel in the combustion chamber takes place. At the crank angle 180°, the piston is at the bottom dead center, at which point the combustion chamber has its maximum volume.

One standard practice for counting the crank angle is to start at 0° when the piston is in the top dead center and then counting the crank angle with positive values up to 360° when the piston is again in the top dead center. Thus, the expansion stroke of the piston corresponds to the crank angle range from 0° to 180° and the compression stroke corresponds to the crank angle range from 180° to 360°, wherein the 360° position is the same as the 0° position.

Another standard practice for counting the crank angle is using positive and negative values for the crank angle. The top dead center again corresponds to the crank angle 0°. The expansion stroke of the piston is counted with positive crank angles and the compression stroke is counted with negative crank angles. In this practice the bottom dead center equals a crank angle of 180° and -180°. During the expansion stroke the crank angle changes from 0° at top dead center to +180° at bottom dead center, and during the compression stroke the crank angle changes from -180° at bottom dead center to 0° at top dead center.

In the following description the practice with positive and negative values for the crank angle is used, i.e. a negative crank angle indicates that the piston is in the compression stroke and a positive crank angle indicates that the piston is in the expansion stroke. Thus, in Fig. 1 the crank angles on the left side of the vertical axis P have negative values and the crank angles on the right side of the vertical axis P have positive values. The smaller the absolute value of the crank angle is, the closer is the position of the piston to the top dead center.

The wording "before the top dead center" or "before top dead center" means that the piston is in the compression stroke, i.e. moving upwardly from the bottom dead center to the top dead center. The corresponding crank angle is negative

The wording "after the top dead center" or "after top dead center" means that the piston is in the expansion stroke, i.e. moving downwardly from the top dead center to the bottom dead center. The corresponding crank angle is positive.

Fig. 1 shows different pressure curves 31, 32, 33. All pressure curves indicate the pressure in the cylinder in dependence of the crank angle KW.

As already said, the pressure curves 31, 32, 33 in Fig. 1 refer to the gas mode with Otto operation. The pressure curves 31 and 32 show examples for the pressure in the combustion chamber of the cylinder if there is no pre-ignition of the air-gas mixture. These pressure curves 31, 32 are almost identical, indicating that the pressure course in the cylinder is essentially the same for each working cycle, if there is no pre-ignition. Pressure curve 33 shows an example for the pressure in the combustion chamber of the cylinder, if pre-ignition of the air-gas mixture takes place. Pressure curve 33 significantly differs from pressure curves 31, 32. Since the undesired pre-ignition typically starts before the piston reaches the top dead center, the pressure curve 33 starts to strongly increase at a smaller (more negative) crank angle than the pressure curves 31 and 32. Thus, the steep increase in the pressure curve 33 is shifted to a smaller crank angle as compared to the pressure curves 31 and 32. The strong pressure increase according to pressure curve 33 takes place at a position when the piston is still farer away from top dead center as compared to the pressure curves 31 and 32. This effect is used to detect the pre-ignition.

As already said during operation of the large engine in the gas mode, the pressure in the cylinder, more precisely, in the combustion chamber of the cylinder, is measured at two fixed positions of the piston, namely at the first position corresponding to the crank angle KW1 and at the second position corresponding to the crank angle KW2. Both the first position KW1 and the second position KW2 are at negative crank angles, wherein both KW1 and KW2 are larger than -180° and smaller than 0°, i.e. both at the first position KW1 and at the second position KW2 the piston has already passed the bottom dead center and not yet reached the top dead center. Preferably, KW2 is larger than KW1, so that the second position KW2 is closer to the top dead center than the first position KW1, thus

$$-180° < KW1 < KW2 < 0°$$

Preferably, the second position KW2 is fixed to a value, at which the gas supply to the cylinder is already finished for the respective working cycle. Furthermore, it is preferred that the first position KW1 is fixed to a value, at which the gas supply to the cylinder is already finished for the respective working cycle.

Most preferred, both the first position and the second position are fixed to a value at which the gas has already been introduced into the cylinder for the respective working cycle.

Thus, the first position KW1 and the second position KW2 are both positions of the piston, at which the gas supply for the respective working cycle is already finished and the piston has not yet reached the top dead center.

In addition, it is preferred that the second position is at a crank angle KW2, which is smaller (more negative) than the crank angle, at which the pilot injection for the induced ignition of the air-gas mixture takes place. Thus, both pressure measurements, namely the measurement at the first position and the measurement at the second position, are performed prior to the pilot injection, so that both pressure measurements are finished before the air-gas mixture is ignited by means of the pilot injection.

For example, the first position KW1 may be between -80° and -40°, preferably between -60° and -40°, e.g. KW1 = -50°, and the second position KW2 may be between -40° and -10°, preferably between -25° and -15°, e.g. KW2 = -19°.

Since the pressure curves 31 and 32 are almost identical, the first pressure P1 measured at the first position KW1 is essentially the same for the pressure curves 31 and 32, and the second pressure P2 measured at the second position KW2 is essentially the same for the pressure curves 31 and 32. Regarding the pressure curve 33 the first pressure P1' measured at the first position KW1 is essentially the same as the first pressure P1 on the pressure curves 31 and 32. However, the second pressure P2' measured on the pressure curve 33 at the second position KW2 is considerably larger as the pressure P2 on the pressure curves 31, 32. This is due to the pre-ignition of the air-gas mixture.

For detecting the pre-ignition, the pressures measured at the first position KW1 and at the second position KW2 are used to calculate a peak pressure PC, PC', preferably by a linear extrapolation of the difference between the second pressure and the first pressure divided by the difference between the second position and the first position.

Thus, a straight line S, S' is calculated, which intersects the pressure curves 31, 32 at the crank angles KW1 and KW2, or the pressure curve 33 at the crank angles KW1 and KW2, respectively. The straight line belonging to the pressure curves 31 and 32 is designated with the reference numeral S and has the slope

$$\frac{P2 - P1}{KW2 - KW1}$$

The straight line belonging to the pressure curve 33 is designated with the reference numeral S' and has the slope:

$$\frac{P2' - P1'}{KW2 - KW1}$$

The straight line S, S' is used to calculate the peak pressure PC or PC', respectively. Preferably, the peak pressure is the calculated pressure at the top dead center, i.e. at the crank angle 0°, where the straight line S, S' intersects the vertical axis P.

For the pressure curves 31, 32, i.e. when there is no pre-ignition, the peak pressure PC is only a bit larger than the mechanical compression pressure. The mechanical compression pressure is the maximum of the mechanical compression curve. The mechanical compression curve indicates the pressure in the combustion chamber in dependence of the crank angle, when no combustion process takes place or when no fuel is inserted into the combustion chamber. The mechanical combustion pressure is the maximum of the pressure which is caused by the volume change of the combustion chamber. Therefore, the mechanical compression pressure is the pressure at the crank angle zero, when no combustion takes place in the cylinder or when no fuel is introduced in the combustion chamber.

During operation in the gas mode (Otto operation) the calculated peak pressure PC is usually only a little larger than the mechanical compression pressure, if no pre-ignition occurs in the cylinder. However, if pre-ignition occurs (pressure curve 33) the calculated peak pressure PC' at the top dead center, i.e. at crank angle 0°, is considerably larger than the mechanical compression pressure. In most cases, when pre-ignition occurs the calculated peak pressure PC' is beyond each reasonable value for the pressure and can even be considerably larger than the maximum pressure the cylinder is designed for.

Therefore, the calculated peak pressure PC or PC', respectively, is a very sensitive and reliable indicator for the occurrence of pre-ignition in the cylinder.

Thus, during operation of the large engine in the gas mode, the peak pressure PC, PC' is calculated and compared to a threshold value. If the peak pressure PC' is larger than the threshold value, there is pre-ignition in the cylinder. If the peak pressure PC is smaller than or at most equal to the threshold value, there is a regular Otto operation in the cylinder without pre-ignition of the air-gas mixture.

An appropriate parameter for defining the threshold value is for example the mechanical compression pressure, i.e. the maximum of the mechanical compression curve. Preferably, the threshold value for the calculated peak pressure PC, PC' is set to a value which is larger than the mechanical compression pressure. For example, the threshold value is at least 1.2 times, preferably at least 1.5 times, the mechanical compression pressure, or the threshold value is at least two times the mechanical compression pressure. Optionally, the threshold value can be dependent on the engine load or speed, i.e. for different engine loads different threshold values may be used.

Of course, it is also possible to use other parameters of the large engine than the mechanical compression pressure to determine an appropriate value for the threshold value.

In case a pre-ignition is detected in the cylinder during the Otto operation in the gas mode, countermeasures are taken to avoid further pre-ignitions in the cylinder. One appropriate countermeasure is switching the large engine to a Diesel operation, for example by changing from the gas mode to the liquid mode.

**Claims**

1. A method for detecting pre-ignition in a large engine having at least one cylinder in which a piston is arranged movable back and forth in an axial direction between a bottom dead center and a top dead center, wherein the large engine can be operated at least in a gas mode, in which an amount of gas is introduced as fuel into the cylinder, the gas is mixed with scavenging air and combusted at an air-gas-ratio, wherein during operation in the gas mode a first pressure (P1, P1') in the cylinder is measured at a first position (KW1) of the piston, and a second pressure (P2, P2') in the cylinder is measured at a second position (KW2) of the piston, **characterized in that** the first position (KW1) and the second position (KW2) are after the bottom dead center and before the top dead center, a peak pressure (PC, PC') is calculated from the first pressure (P1, P1') and the second pressure (P2, P2'), and pre-ignition is detected by comparing the peak pressure (PC, PC') with a threshold value.

2. A method in accordance with claim 1, wherein the second position (KW2) is closer to the top dead center than the first position (KW1).

3. A method according to anyone of the preceding claims, wherein the peak pressure (PC, PC') is the pressure at the top dead center.

4. A method according to anyone of the preceding claims, wherein the peak pressure (PC, PC') is calculated by a linear extrapolation of the difference between the second pressure (P2, P2') and the first pressure (P1, P1') divided by the difference between the second position (KW2) and the first position (KW1).

5. A method according to anyone of the preceding claims wherein the threshold value is larger than the maximum of a mechanical compression curve of the cylinder.

6. A method according to claim 5, wherein the threshold value is at least 1.5 times the maximum of the mechanical compression curve.

7. A method according to anyone of claims 5-6, wherein the threshold value is at least two times the maximum of the mechanical compression curve.

8. A method according to anyone of the preceding claims, wherein the gas has already been introduced into the cylinder, when the piston reaches the second position (KW2).

9. A method according to anyone of the preceding claims, wherein the gas has already been introduced into the cylinder, when the piston reaches the first position (KW1).

10. A method according to anyone of the preceding claims, wherein the large engine is switched to a Diesel operation, after a pre-ignition has been detected.

11. A large engine **characterized in that** the large engine is operated with a method according to anyone of the preceding claims.

12. A large engine according to claim 11, designed as a longitudinally scavenged two-stroke large diesel engine, that is configured as a dual-fuel large diesel engine, which can be operated in a liquid mode, in which a liquid fuel is introduced into a cylinder for combustion, and which can further be operated in the gas mode, in which an amount of gas is introduced as fuel into the cylinder.

**Patentansprüche**

1. Verfahren zur Erkennung einer Frühzündung bei einem Grossmotor mit mindestens einem Zylinder, in dem ein Kolben zwischen einem unteren Totpunkt und einem oberen Totpunkt in axialer Richtung hin und her bewegbar angeordnet ist, wobei der Grossmotor zumindest in einem Gasmodus betreibbar ist, bei dem eine Gasmenge als Brennstoff in den Zylinder eingebracht wird, das Gas mit Spülluft vermischt und mit einem Luft-Gas-Verhältnis verbrannt wird, wobei während des Betriebs im Gasmodus ein erster Druck (P1, P1') im Zylinder an einer ersten Position (KW1) des Kolbens gemessen wird und ein zweiter Druck (P2, P2') im Zylinder an einer zweiten Position (KW2) des Kolbens gemessen wird, **dadurch gekennzeichnet, dass** die erste Position (KW1) und die zweite Position (KW2) nach dem unteren Totpunkt und vor dem oberen Totpunkt liegen, aus dem ersten Druck (P1, P1') und dem zweiten Druck (P2, P2') ein Spitzendruck (PC, PC') berechnet wird und durch Vergleich des Spitzendrucks (PC, PC') mit einem Schwellenwert eine Frühzündung erkannt wird.

2. Verfahren nach Anspruch 1, wobei die zweite Position (KW2) näher am oberen Totpunkt liegt als die erste Position (KW1).

3. Verfahren nach einem der vorhergehenden Ansprüche, wobei der Spitzendruck (PC, PC') der Druck am oberen Totpunkt ist.

4. Verfahren nach einem der vorhergehenden Ansprüche, wobei der Spitzendruck (PC, PC') durch eine lineare Extrapolation der Differenz zwischen dem zweiten Druck (P2, P2') und dem ersten Druck (P1, P1) geteilt durch die Differenz zwischen der zweiten Position (KW2) und der ersten Position (KW1) berechnet wird.

5. Verfahren nach einem der vorhergehenden Ansprüche, wobei der Schwellenwert grösser ist als das Maximum einer mechanischen Kompressionskurve des Zylinders.

6. Verfahren nach Anspruch 5, wobei der Schwellenwert mindestens das 1,5-fache des Maximums der mechanischen Kompressionskurve beträgt.

7. Verfahren nach einem der Ansprüche 5-6, wobei der Schwellenwert mindestens das Zweifache des Maximums der mechanischen Kompressionskurve beträgt.

8. Verfahren nach einem der vorhergehenden Ansprüche, wobei das Gas bereits in den Zylinder eingebracht wurde, wenn der Kolben die zweite Position (KW2) erreicht.

9. Verfahren nach einem der vorhergehenden Ansprüche, wobei das Gas bereits in den Zylinder eingebracht wurde, wenn der Kolben die erste Position (KW1) erreicht.

10. Verfahren nach einem der vorhergehenden Ansprüche, wobei der Grossmotor in einen Dieselbetrieb umgeschaltet wird, nachdem eine Frühzündung detektiert wurde.

11. Grossmotor, **dadurch gekennzeichnet, dass** der Grossmotor mit einem Verfahren nach einem der vorhergehenden Ansprüche betrieben wird.

12. Grossmotor nach Anspruch 11, der als längsgespülter Zweitakt-Grossdieselmotor ausgelegt ist, der als Dual-Fuel-Grossdieselmotor konfiguriert ist, der in einem Flüssigmodus betrieben werden kann, in dem ein flüssiger Brennstoff zur Verbrennung in einen Zylinder eingebracht wird, und der ferner in dem Gasmodus betrieben werden kann, in dem eine Gasmenge als Brennstoff in den Zylinder eingebracht wird.

## Revendications

1. Procédé de détection d'un pré-allumage dans un gros moteur avec au moins un cylindre, dans lequel un piston est disposé de manière mobile en va-et-vient dans une direction axiale entre un point mort bas et un point mort haut, dans lequel le gros moteur peut fonctionner au moins dans un mode de gaz, dans lequel une quantité de gaz est introduite en tant que carburant dans le cylindre, le gaz est mélangé avec de l'air de balayage et brûlé avec un rapport air-gaz, dans lequel, pendant le fonctionnement dans le mode de gaz, une première pression (P1, P1') dans le cylindre est mesurée à une première position (KW1) du piston, et une deuxième pression (P2, P2') dans le cylindre est mesurée à une deuxième position (KW2) du piston, **caractérisé en ce que** la première position (KW1) et la deuxième position (KW2) se trouvent après le point mort bas et avant le point mort haut, une pression de pointe (PC, PC') est calculée à partir de la première pression (P1, P1') et de la deuxième pression (P2, P2'), et un pré-allumage est détecté par comparaison de la pression de pointe (PC, PC') avec une valeur seuil.

2. Procédé selon la revendication 1, dans lequel la deuxième position (KW2) est plus proche du point mort haut que la première position (KW1).

3. Procédé selon l'une quelconque des revendications précédentes, dans lequel la pression de pointe (PC, PC') est la pression au point mort haut.

4. Procédé selon l'une quelconque des revendications précédentes, dans lequel la pression de pointe (PC, PC') est calculée par une extrapolation linéaire de la différence entre la deuxième pression (P2, P2') et la première pression (P1, P1) divisée par la différence entre la deuxième position (KW2) et la première position (KW1).

5. Procédé selon l'une quelconque des revendications précédentes, dans lequel la valeur seuil est supérieure au maximum d'une courbe de compression mécanique du cylindre.

6. Procédé selon la revendication 5, dans lequel la valeur seuil est au moins 1,5 fois le maximum de la courbe de compression mécanique.

7. Procédé selon l'une quelconque des revendications 5 à 6, dans lequel la valeur seuil est au moins deux fois le maximum de la courbe de compression mécanique.

8. Procédé selon l'une quelconque des revendications précédentes, dans lequel le gaz a déjà été introduit dans le cylindre, lorsque le piston atteint la deuxième position (KW2).

9. Procédé selon l'une quelconque des revendications précédentes, dans lequel le gaz a déjà été introduit dans le cylindre, lorsque le piston atteint la première position (KW1).

10. Procédé selon l'une quelconque des revendications précédentes, dans lequel le gros moteur est commuté sur un fonctionnement diesel, après qu'un pré-allumage a été détecté.

11. Gros moteur **caractérisé en ce que** le gros moteur fonctionne avec un procédé selon l'une quelconque des revendications précédentes.

12. Gros moteur selon la revendication 11, conçu comme un gros moteur diesel à deux temps à balayage longitudinal, qui est configuré comme un gros moteur diesel bicarburant, qui peut fonctionner dans un mode liquide, dans lequel un carburant liquide est introduit dans un cylindre pour la combustion, et qui peut en outre fonctionner dans le mode gaz, dans lequel une quantité de gaz est introduite en tant que carburant dans le cylindre.

# Fig.1

## REFERENCES CITED IN THE DESCRIPTION

**Patent documents cited in the description**

- EP 2957750 A1
- EP 3267017 A